**Europäisches Patentamt**

**European Patent Office**

**Office européen des brevets**

(19)

(11) Veröffentlichungsnummer: **0 009 202**
**B1**

# EUROPÄISCHE PATENTSCHRIFT

(12)

(45) Veröffentlichungstag der Patentschrift:
02.09.81

(51) Int. Cl.³: **C 07 F 7/21**

(21) Anmeldenummer: **79103387.1**

(22) Anmeldetag: **11.09.79**

(54) **Verfahren zum Herstellen von cyclischen Dimethylpolysiloxanen.**

(30) Priorität: **12.09.78 DE 2839652**

(43) Veröffentlichungstag der Anmeldung:
**02.04.80 Patentblatt 80/7**

(45) Bekanntmachung des Hinweises auf die Patenterteilung:
**02.09.81 Patentblatt 81/35**

(84) Benannte Vertragsstaaten:
**BE CH DE FR GB IT NL SE**

(56) Entgegenhaltungen:
**DE-B-1 245 955**
**FR-A-1 176 541**

(73) Patentinhaber: **WACKER-CHEMIE GMBH,
Prinzregentenstrasse 22, D-8000 München 22 (DE)**

(72) Erfinder: **Burkhardt, Jürgen, Dr., isenbreite 25,
D-8261 Winhöring (DE)**
Erfinder: **Louis, Eckhart, Dr., Angererweg 20,
D-8263 Burghausen (DE)**
Erfinder: **Rauchberger, Werner, Regerstrasse 7,
D-8263 Burghausen (DE)**

Verfahren zum Herstellen von cyclischen Dimethylpolysiloxanen

Eine vorteilhafte Möglichkeit der Verwertung von Abfall, der lineares oder verzweigtes Organopolysiloxan, das mindestens zu 50 Molprozent aus Dimethylsiloxaneinheiten besteht, enthält und z. B. bei der Herstellung von Gegenständen aus Organopolysiloxanelastomeren erhalten wird, stellt die Herstellung von cyclischen Dimethylpolysiloxanen aus solchem linearem oder verzweigtem Organopolysiloxan dar. Gemäß US-PS 2 934 550 (ausgegeben: 26. April 1960, J. Jack, Imperial Chemical Industries Limited, entsprechend der FR-PS 1 223 448) werden cyclische Dimethylpolysiloxane durch Erwärmen eines Gemisches aus praktisch linearem Dimethylpolysiloxan und einem Aluminium- oder Phosphorhalogenid, also einem die Umlagerung von Siloxanbindungen fördernden Katalysator, unter praktisch wasserfreien Bedingungen auf mindestens 250° C und gleichzeitiges Abdestillieren der bei diesem Erwärmen gebildeten cyclischen Dimethylpolysiloxane hergestellt. Gegenüber diesem bekannten Verfahren zum Herstellen von cyclischen Dimethylpolysiloxanen aus praktisch linearem Dimethylpolysiloxan und ähnlichen Verfahren zum Verwerten von Abfall, der lineares oder verzweigtes, mindestens zu 50 Molprozent aus Dimethylsiloxaneinheiten bestehendes Organopolysiloxan enthält (US-PS 2 673 843, ausgegeben: 30. März 1954, B. J. Humphrey et al., The Connecticut Hard Rubber, und GB-PS 752 860, ausgegeben: 18. Juli 1956, Midland Silicones Limited), hat das erfindungsgemäße Verfahren beispielsweise die Vorteile, daß es bei niedrigeren Temperaturen durchgeführt werden kann, weder der Aufwand für den Ausschluß von Wasser noch Aufwand für die Abtrennung von beim Abdestillieren von cyclischem Dimethylpolysiloxan gleichzeitig destilliertem Katalysator, welcher die Umlagerung von Siloxanbindungen fördert, erforderlich ist und/oder daß höhere Raum-Zeit-Ausbeuten erzielt werden.

Gegenstand der Erfindung ist ein Verfahren zum Herstellen von cyclischen Dimethylpolysiloxanen durch Erwärmen eines Gemisches aus Organopolysiloxan, das mindestens zu 50 Molprozent aus Dimethylsiloxaneinheiten besteht, und einem die Umlagerung von Siloxanbindungen fördernden Katalysator und gleichzeitiges Abdestillieren der bei diesem Erwärmen gebildeten cyclischen Dimethylpolysiloxane beim Druck der umgebenden Atmosphäre und in Abwesenheit von organischem Lösungsmittel, dadurch gekennzeichnet, daß als die Umlagerung von Siloxanbindungen, fördernder Katalysator 50- bis 85gewichtsprozentige wäßrige Schwefelsäure und als Organopolysiloxan zu Elastomer teilweise oder vollständig vernetzte Masse verwendet wird.

In DE-AS 1 245 955 wird dreimal, nämlich in Spalte 1, Zeile 24, Spalte 2, Zeile 38 und Spalte 3, Zeile 8 Gelbildung als unerwünscht bezeichnet und das dort beanspruchte Verfahren ist im Gegensatz zum Verfahren gemäß FR-PS 1 176 541, bei dem die Mitverwendung von Lösungsmittel obligatorisch ist, auf den Einsatz von offenkettigen Polymeren als nicht-cyclischen Polysiloxanen beschränkt. Der Fachmann mußte und muß daher annehmen, daß die Herstellung von cyclischen Dimethylpolysiloxanen aus zu Elastomer teilweise oder vollständig vernetzter Masse nach dem aus der DE-AS bekannten Verfahren nicht möglich ist. Diese Druckschrift konnte daher ebenso wie FR-PS 1 176 541, die der in DE-AS 1 245 995 in Spalte 1, Zeile 23 genannten DE-AS 1 083 820 entspricht, das erfindungsgemäße Verfahren nicht nahelegen. Weil teilweise oder vollständig vernetztes Organopolysiloxan nicht offenkettig und im Gegensatz zu dem gemäß DE-AS 1 245 955 eingesetzten Organopolysiloxan nicht flüssig ist, ist das beanspruchte Verfahren erfinderisch.

Die bei dem erfindungsgemäßen Verfahren eingesetzten teilweise oder vollständig vernetzten Massen enthalten meist zusätzlich zu Organopolysiloxan übliche Hilfsstoffe für die Elastomerherstellung, wie Füllstoffe und Pigmente, sowie z. B. Vernetzungskatalysator bzw. Vernetzungskatalysator-Spaltprodukte. Massen der obenerwähnten Art bzw. Elastomere aus solchen Massen werden als Abfall z. B. bei der Verarbeitung mittels Radikalbildung vernetzbaren Massen auf Grundlage von Diorganopolysiloxan durch Verformung und Vernetzung unter Druck erhalten.

Die gegebenenfalls zusätzlich zu Methylgruppen in den im Rahmen der Erfindung eingesetzten Organopolysiloxanen vorliegenden anderen organischen Gruppen sind vorzugsweise Äthyl-, Vinyl- und/oder Phenylgruppen. Die gegebenenfalls zusätzlich zu Diorganosiloxaneinheiten vorliegenden anderen Siloxaneinheiten sind insbesondere Triorganosiloxan-, Monoorganosiloxan- und $SiO_{4/2}$-Einheiten.

50- bis 85gewichtsprozentige wäßrige Schwefelsäure hat eine Dichte $D^{20} = 1,40$ bis 1,78 g/cm³.

Ist in der wäßrigen Schwefelsäure der Anteil der Schwefelsäure geringer als 50 Gewichtsprozent, bezogen auf das Gesamtgewicht von Schwefelsäure und Wasser, so ist die Bildung von cyclischem Dimethylpolysiloxan unerwünscht langsam. Ist in der wäßrigen Schwefelsäure der Anteil der Schwefelsäure höher als 85 Gewichtsprozent, bezogen auf das Gesamtgewicht von Schwefelsäure und Wasser, erfolgt zu leicht eine Verkohlung der Organopolysiloxane.

Bevorzugt als die Umlagerung von Siloxanbindungen fördernder Katalysator bei dem erfindungsgemäßen Verfahren ist 55- bis 80gewichtsprozentige wäßrige Schwefelsäure, entsprechend einer Dichte $D^{20} = 1,45$ bis 1,73 g/cm³.

Eine technische Reinheit der bei dem erfindungsgemäßen Verfahren eingesetzten Schwefelsäure ist völlig ausreichend.

Vorzugsweise wird die wäßrige Schwefelsäure in Mengen von 0,4 bis 1,5 l, insbesondere 0,6 bis 1,2 l, je Kilogramm der Gesamtmenge an eingesetztem Organopolysiloxan und gegebenenfalls zusammen mit diesem Organopolysiloxan in das Verfahren eingebrachten anderen Stoffen als wäßriger Schwefelsäure, wie Füllstoffen, eingesetzt.

Vorzugsweise wird das Gemisch aus erfindungsgemäß eingesetzten Organopolysiloxan und wäßriger Schwefelsäure auf 130 bis 150° C erwärmt.

Die Dauer des Erwärmens beträgt im allgemeinen 1,5 bis 6 Stunden.

Um eine gute Vermischung der bei dem erfindungsgemäßen Verfahren eingesetzten Stoffe zu erzielen, ist es bevorzugt, das Gemisch dieser Stoffe beispielsweise durch Rühren oder Umwälzen zu bewegen.

Gleichzeitig mit den cyclischen Dimethylpolysiloxanen destilliert Wasser ab. Es ist zweckmäßig, dieses Wasser nach dem Abtrennen von cyclischem Dimethylpolysiloxan wieder in das Gemisch aus linearem oder verzweigtem Organopolysiloxan und wäßriger Schwefelsäure zurückzuführen, so daß die Konzentration von Schwefelsäure im Wasser 80 Gewichtsprozent, bezogen auf das Gesamtgewicht von Schwefelsäure und Wasser, nicht übersteigt.

Das erfindungsgemäße Verfahren kann absatzweise, halb- oder vollkontinuierlich durchgeführt werden.

Bei dem erfindungsgemäßen Verfahren eingesetzte Schwefelsäure kann nach dem Abtrennen von festem Rückstand bei weiteren Ansätzen des erfindungsgemäßen Verfahrens, erforderlichenfalls unter Zusatz von frischer Schwefelsäure, wieder eingesetzt werden.

Die erfindungsgemäß hergestellten cyclischen Dimethylpolysiloxane sind ohne weitere Behandlung neutral und können ohne weitere Behandlung, wie Reinigung, für alle Zwecke eingesetzt werden, für die cyclische Dimethylpolysiloxane eingesetzt werden können. Sie können z. B. wieder zu linearen, hochviskosen, für die Elastomerherstellung geeigneten Diorganopolysiloxanen polymerisiert oder mit Hexamethyldisiloxan zu Ölen äquilibriert werden.

In dem folgenden Beispiel beziehen sich alle Angaben von Prozentsätzen auf das Gewicht, soweit nichts anderes angegeben ist.

### Beispiel

In einem Topf, der mit Rührer und senkrechtem Kühler ausgestattet ist, wobei der Kühler mit einem Abscheidebehälter, aus dem unten Wasser in den Topf zurückfließen und oben cyclisches Dimethylpolysiloxan abfließen kann, verbunden ist, wird unter Rühren ein Gemisch aus 400 g eines gemahlenen Elastomeren, das durch Vernetzen einer Mischung aus 71,5% linearem, hochviskosem Dimethylpolysiloxan und 28,5% pyrogen erzeugtem Siliciumdioxyd mittels eines organischen Peroxyds erzeugt wurde, und 500 ml 65%iger wäßriger Schwefelsäure ($D^{20}$ = 1,55 g/ml.) mittels eines Ölbads, das bei 185° C betrieben wird, auf etwa 140° C erwärmt. Mit einer Temperatur von 95 bis 97° C destilliert ein Gemisch aus cyclischen Dimethylpolysiloxanen und Wasser. Innerhalb von 3 Stunden werden aus dem Abscheider 253 g (89% d. Th., bezogen auf eingesetztes Dimethylpolysiloxan) cyclische Dimethylpolysiloxane, die zu 70 bis 75% aus Octamethylcyclotetrasiloxan und 15 bis 20% aus Decamethylcyclopentasiloxan und cyclischen Dimethylpolysiloxanen nicht bestimmten Polymerisationsgrades bestehen, erhalten.

## Patentansprüche

1. Verfahren zum Herstellen von cyclischen Dimethylpolysiloxanen durch Erwärmen eines Gemisches aus linearem oder verzweigtem Organopolysiloxan, das mindestens zu 50 Molprozent aus Dimethylsiloxaneinheiten besteht, und einem die Umlagerung von Siloxanbindungen fördernden Katalysator und gleichzeitiges Abdestillieren der bei diesem Erwärmen gebildeten cyclischen Dimethylpolysiloxane beim Druck der umgebenden Atmosphäre und in Abwesenheit von organischem Lösungsmittel, dadurch gekennzeichnet, daß als die Umlagerung von Siloxanbindungen fördernder Katalysator 50- bis 85gewichtsprozentige wäßrige Schwefelsäure und als Organopolysiloxan zu Elastomer teilweise oder vollständig vernetzte Masse verwendet wird.

2. Verfahren nach Anspruch 1, dadurch gekennzeichnet, daß 55- bis 80gewichtsprozentige wäßrige Schwefelsäure verwendet wird.

3. Verfahren nach Anspruch 1 und 2, dadurch gekennzeichnet, daß 0,4 bis 1,5 l wäßrige Schwefelsäure je Kilogramm der Gesamtmenge an eingesetztem Organopolysiloxan und gegebenenfalls zusammen mit diesem Organopolysiloxan in das Verfahren eingebrachten anderen Stoffen als wäßrige Schwefelsäure eingesetzt werden.

## Claims

1. Process for the manufacture of cyclic dimethylpolysiloxanes by heating a mixture comprising a linear or branched organopolysiloxane, that contains at least 50 mole per cent of dimethylsiloxane units, and of a catalyst promoting the rearrangement of siloxane bonds, and simultaneously distilling off, at the pressure of the surrounding atmosphere and in the absence of an organic solvent, the cyclic dimethylpolysiloxanes formed during this heating operation, characterised in that from 50 to 85 per cent by weight aqueous sulphuric acid is used as the catalyst promoting the rearrangement of siloxane bonds and a substance that is partially or completely cross-linked to an elastomer is used as the organopolysiloxane.

2. Process according to claim 1, characterised in that from 55 to 80 per cent by weight aqueous sulphuric acid is used.

3. Process according to claims 1 and 2, characterised in that, as aqueous sulphuric acid, from 0.4 to 1.5 litres of aqueous sulphuric acid are used per kilogram of the total quantity of organopolysiloxane used and of other substances optionally introduced into the process together with the organopolysiloxane.

## Revendications

1. Procédé de préparation de polydiméthylsiloxanes cycliques par chauffage d'un mélange d'un polyorganosiloxane linéaire ou ramifié constitué d'au moins 50% en moles de motifs diméthyl-siloxaniques, et d'un catalyseur accélérant la transposition de liaisons siloxaniques, et, en même temps, séparation par distillation des poly-diméthylsiloxanes cycliques formés lors du chauffage, sous la pression de l'atmosphère environnante et en l'absence d'un solvant organique, procédé caractérisé en ce qu'on utilise, comme catalyseur accélérant la transposition de liaisons siloxaniques, un acide sulfurique aqueux d'une concentration comprise entre 50 et 85% en poids, et, comme polyorganosiloxane, une matière convertie en un élastomère par réticulation partielle ou totale.

2. Procédé selon la revendication 1, caractérisé en ce qu'on utilise un acide sulfurique aqueux d'une concentration comprise entre 55 et 80% en poids.

3. Procédé selon l'une des revendications 1 et 2, caractérisé en ce qu'on met en jeu de 0,4 à 1,5 litre d'acide sulfurique aqueux par kilogramme de la quantité totale du polyorganosiloxane utilisé et des matières autres que l'acide sulfurique aqueux qui sont éventuellement mises en jeu dans le procédé avec ce poly-organosiloxane.